(19) Europäisches Patentamt
European Patent Office
Office européen des brevets

(11) EP 4 321 549 A1

(12) **EUROPEAN PATENT APPLICATION**

(43) Date of publication:
**14.02.2024 Bulletin 2024/07**

(21) Application number: **22189449.6**

(22) Date of filing: **09.08.2022**

(51) International Patent Classification (IPC):
***C08G 18/08*** *(2006.01)* ***C08G 18/38*** *(2006.01)*
***C08G 18/73*** *(2006.01)* ***C08G 18/79*** *(2006.01)*
***C08L 75/02*** *(2006.01)* ***C08L 75/10*** *(2006.01)*
***C09J 175/02*** *(2006.01)* ***C08G 18/10*** *(2006.01)*

(52) Cooperative Patent Classification (CPC):
**C08G 18/3821; C08G 18/0852; C08G 18/10; C08G 18/73; C08G 18/792; C08L 75/02; C08L 75/10; C09J 175/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro LLC**
**Pittsburgh, PA 15205-9741 (US)**

(72) Inventor: **The designation of the inventor has not yet been filed**

(74) Representative: **Levpat**
**c/o Covestro AG**
**Gebäude K12**
**51365 Leverkusen (DE)**

(54) **LOW VISCOSITY ASPARTATE TERMINATED PREPOLYMERS FOR ADHESIVE APPLICATIONS**

(57) An aspartate-terminated prepolymer can be a reaction product of a reaction mixture including an aliphatic NCO-terminated prepolymer having an NCO content of from 0.5% to 15% and a number average NCO functionality of < 2, and a compound according to formula (I)

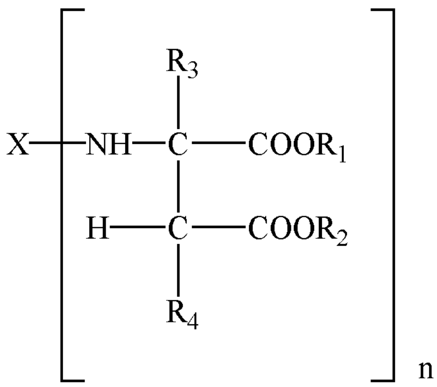

(I)

wherein, X represents a linear or branched aliphatic group obtained by removing amino groups from a linear or branched aliphatic polyamine, $R_1$ and $R_2$ are identical or different and represent organic groups which are inert towards isocyanate groups at a temperature of 100°C or less, $R_3$ and $R_4$ are identical or different and represent hydrogen or organic groups which are inert towards isocyanate groups at a temperature of 100°C or less, n represents an integer with a value of at least 2. The aliphatic NCO-terminated prepolymer can the compound according to formula I can be combined at an NCO:NH equivalent ratio of 1:1.5 to 1:5.

EP 4 321 549 A1

## Description

### FIELD OF THE INVENTION

The present invention relates in general to low viscosity aspartate-terminated prepolymers.

### BACKGROUND OF THE INVENTION

In conventional multilayer flexible packaging, two component (2K) polyurethane adhesive compositions are typically used to laminate the layers. These compositions are oftentimes based on polyurethane systems that employ aromatic polyisocyanates. After the adhesive is applied and the films are laminated, the films are wound onto large rolls and are stored at elevated temperatures for several days to allow for any unreacted polyisocyanate monomer to complete curing. If this curing step is eliminated, or is of insufficient length, the laminates may suffer from two problems: first, the mechanical strength of the adhesive bond may not be sufficient for further handling and use of the laminated packaging film; and second, unreacted monomeric aromatic polyisocyanates can react with moisture in the product to be packaged, generating primary aromatic amines (PAA) which may migrate into the contents of the package. This is particularly problematic in high performance packaging systems, which are subjected to elevated temperatures (e.g., 116-130°C) during sterilization of the packaging material and contents (retort process).

The packaging industry is continually trying to identify adhesive solutions to eliminate this primary aromatic amine migration problem for health and safety reasons, while maintaining the cure speeds to which they are accustomed with conventional two component (2K) aromatic polyisocyanate-based adhesives. One approach has been to replace the aromatic polyisocyanate component in the two component (2K) polyurethane adhesive composition with aliphatic polyisocyanates. Although this approach eliminates the potential for aromatic amine formation, the lower reactivity observed with the use of aliphatic isocyanates leads to a much slower cure time. As a result, the rolled films must be stored for a much longer time (potentially up to two weeks) at elevated temperature and humidity compared with the two to three-day cure of the aromatic isocyanate-based adhesives.

Thus, there continues to exist a need in the art for adhesives that: 1) can meet the mechanical requirements necessary for a film lamination adhesive; 2) do not suffer from PAA migration; and 3) have sufficient cure speed so that extended cure times are not required to meet these requirements.

### SUMMARY OF THE INVENTION

An aspartate-terminated prepolymer can be a reaction product of a first reaction mixture including an aliphatic NCO-terminated prepolymer having an NCO content of from 0.5 wt% to 15 wt% and a number average NCO functionality of < 2, and a compound according to formula (I):

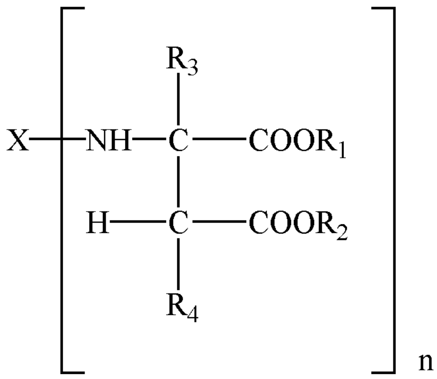

(I)

wherein,

X represents a linear, branched, and/or cyclic aliphatic group obtained by removing amino groups from a linear, branched, and/or cyclic aliphatic polyamine,

$R_1$ and $R_2$ are identical or different and represent organic groups which are inert towards isocyanate groups at a temperature of 100°C or less,

$R_3$ and $R_4$ are identical or different and represent hydrogen or organic groups which are inert towards isocyanate groups at a temperature of 100°C or less, and

n represents an integer with a value of at least 2.

The aliphatic NCO-terminated prepolymer and the compound according to formula (I) can be combined at an NCO:NH equivalent ratio of 1:1.5 to 1:5.

An adhesive can be a reaction product of an adhesive reaction mixture including an aliphatic polyisocyanate and an aspartate-terminated prepolymer as described herein. The aliphatic polyisocyanate and the aspartate-terminated prepolymer can be combined at an NCO:NH equivalent ratio of from 0.9:1 to 1.75:1.

A multi-layered laminated film can include an adhesive as described herein applied to one or more substrate layers.

A method of minimizing PAA migration in a packaging material can include applying an adhesive as described herein to one or more substrates of a packaging material and curing the adhesive.

These and other advantages and benefits of the present invention will be apparent from the Detailed Description of the Invention herein below.

## DETAILED DESCRIPTION OF THE INVENTION

Although the following detailed description contains many specifics for the purpose of illustration, a person of ordinary skill in the art will appreciate that many variations and alterations to the following details can be made and are considered to be included herein. Accordingly, the following embodiments are set forth without any loss of generality to, and without imposing limitations upon, any claims set forth. It is also to be understood that the terminology used herein is for the purpose of describing particular embodiments only, and is not intended to be limiting. Unless defined otherwise, all technical and scientific terms used herein have the same meaning as commonly understood by one of ordinary skill in the art to which this disclosure belongs.

As used in this written description, the singular forms "a," "an" and "the" include express support for plural referents unless the context clearly dictates otherwise. Thus, for example, reference to "a polymer" or "the polymer" can include a plurality of such polymers.

In this application, "comprises," "comprising," "containing" and "having" and the like can have the meaning ascribed to them in U.S. Patent law and can mean "includes," "including," and the like, and are generally interpreted to be open ended terms. The terms "consisting of' or "consists of' are closed terms, and include only the components, structures, steps, or the like specifically listed in conjunction with such terms, as well as that which is in accordance with U.S. Patent law. "Consisting essentially of' or "consists essentially of' have the meaning generally ascribed to them by U.S. Patent law. In particular, such terms are generally closed terms, with the exception of allowing inclusion of additional items, materials, components, steps, or elements, that do not materially affect the basic and novel characteristics or function of the item(s) used in connection therewith. For example, trace elements present in a composition, but not affecting the compositions nature or characteristics would be permissible if present under the "consisting essentially of' language, even though not expressly recited in a list of items following such terminology. When using an open ended term, like "comprising" or "including," in this written description it is understood that direct support should be afforded also to "consisting essentially of' language as well as "consisting of' language as if stated explicitly and vice versa.

The terms "first," "second," "third," "fourth," and the like in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. For example, a composition that is "substantially free of' particles would either completely lack particles, or so nearly completely lack particles that the effect would be the same as if it completely lacked particles. In other words, a composition that is "substantially free of' an ingredient or element may still actually contain such item as long as there is no measurable effect thereof.

As used herein, the term "about" is used to provide flexibility to a numerical range endpoint by providing that a given value may be "a little above" or "a little below" the endpoint. Unless otherwise stated, use of the term "about" in accordance with a specific number or numerical range should also be understood to provide support for such numerical

terms or range without the term "about". For example, for the sake of convenience and brevity, a numerical range of "about 50 milligrams to about 80 milligrams" should also be understood to provide support for the range of "50 milligrams to 80 milligrams." Furthermore, it is to be understood that in this specification support for actual numerical values is provided even when the term "about" is used therewith. For example, the recitation of "about" 30 should be construed as not only providing support for values a little above and a little below 30, but also for the actual numerical value of 30 as well. Unless otherwise specified, all numerical parameters are to be understood as being prefaced and modified in all instances by the term "about," in which the numerical parameters possess the inherent variability characteristic of the underlying measurement techniques used to determine the numerical value of the parameter.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "1 to 5" should be interpreted to include not only the explicitly recited values of 1 to 5, but also include individual values and sub-ranges within the indicated range. Thus, included in this numerical range are individual values such as 2, 3, and 4 and sub-ranges such as from 1-3, from 2-4, and from 3-5, etc., as well as 1, 2, 3, 4, and 5, individually.

This same principle applies to ranges reciting only one numerical value as a minimum or a maximum. Furthermore, such an interpretation should apply regardless of the breadth of the range or the characteristics being described.

Reference throughout this specification to "an example" means that a particular feature, structure, or characteristic described in connection with the example is included in at least one embodiment. Thus, appearances of the phrases "in an example" in various places throughout this specification are not necessarily all referring to the same embodiment.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

As described previously, traditional 2K adhesive formulations for flexible packaging applications can employ an aromatic polyisocyanate and a polyol. However, residual polyisocyanate can react with water to form primary aromatic amines (PAA) as an unwanted byproduct, which can migrate into the contents of the flexible packaging. These traditional 2K adhesive formulations have the benefit of short reaction times and numerous polyol options to help tailor the initial viscosity of the resulting adhesive to within a reasonable range. Thus, reaction time and initial viscosity are key considerations in developing adhesive systems that do not generate primary aromatic amines.

The present disclosure describes flexible polyaspartates that can overcome the rigidity issues of conventional polyaspartate-based polyureas, while maintaining the fast, tunable cure speed desired to provide adhesives with minimized primary aromatic amines or, in some cases, primary aromatic amine-free adhesives. One of the attractive features of polyaspartates is their relatively fast and tunable cure speed with aliphatic isocyanates as compared with the polyurethane systems typically employed in 2K laminated films. This reactivity can be tuned by selecting polyamines with differing degrees of steric hindrance around the amine, as the basis for the polyaspartate.

Various embodiments of the present disclosure are directed to aspartate-terminated prepolymers and associated adhesives. The aspartate-terminated prepolymer can be the reaction product of a first reaction mixture including an NCO-functional prepolymer and a polyaspartate combined at an NCO:NH equivalent ratio of 1:1.5 to 1:5. The NCO-functional prepolymer used to prepare the polyaspartate terminated prepolymer can have an NCO content of from 0.5 wt% to 15 wt% based on ISO 11909:2007 and a number average functionality of $< 2$, calculated using the method described in paragraph 0039 . The polyaspartate can be a compound according to formula (I)

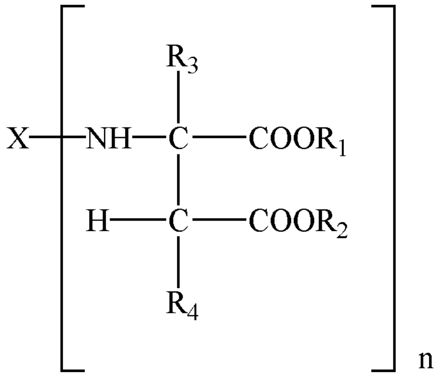

(I)

wherein,

X represents a linear, branched, and/or cyclic aliphatic group obtained by removing amino groups from a linear, branched, and/or cyclic aliphatic polyamine,
$R_1$ and $R_2$ are identical or different and represent organic groups which are inert towards isocyanate groups at a temperature of 100°C or less,
$R_3$ and $R_4$ are identical or different and represent hydrogen or organic groups which are inert towards isocyanate groups at a temperature of 100°C or less, and
n represents an integer with a value of at least 2.

In further detail, the NCO-terminated prepolymer can be an aliphatic NCO-terminated prepolymer. In some examples, the NCO-terminated prepolymer can be a reaction product of a second reaction mixture including an aliphatic polyisocyanate and an isocyanate reactive component. In some additional examples, the NCO-terminated prepolymer can be a reaction product of a second reaction mixture including an aliphatic polyisocyanate, a polyfunctional isocyanate-reactive component, and a monofunctional component. As used herein, "polyfunctional isocyanate-reactive component" refers to an isocyanate-reactive component having a number average functionality (e.g., -OH, -NH, -SH, or a combination thereof, for example) of ≥ 2. As used herein, "monofunctional component" refers to a functional component having a number average functionality (e.g., -NCO, -OH, -NH, -SH, or a combination thereof, for example) of < 2.

A variety of aliphatic polyisocyanates can be included in the second reaction mixture. Non-limiting examples can include 1,4-tetramethylene diisocyanate, 1,5-pentamethylene diisocyanate (PDI), 1,6-hexamethylene diisocyanate (HDI), 2,2,4-trimethylhexamethylene diisocyanate, dodecamethylene diisocyanate, 2-methyl-1,5-diisocyanatopentane, 1,4-diisocyanatocyclohexane, 1-isocyanato-3,3,5-trimethyl-5-isocyanato-methylcyclohexane (IPDI), 2,4-diisocyanato-dicyclohexyl-methane, 4,4'-diisocyanato-dicyclohexyl-methane, 1,3-bis (isocyanatomethyl)-cyclohexane, 1,4-bis (isocyanatomethyl)-cyclohexane, 1-isocyanato-1-methyl-3(4)-isocyanatomethyl-cyclohexane (IMCI), bis(4-isocyanato-3-methyl-cyclohexyl)-methane, 1,4-cyclohexane diisocyanate (CHDI), or mixtures of any of these. In some specific examples, the aliphatic polyisocyanate can include pentamethylene diisocyanate (PDI), 1,6-hexamethylene diisocyanate (HDI), 1-isocyanato-3,3,5-trimethyl-5-isocyanato-methylcyclohexane (IPDI), or a combination thereof.

Thus, a variety of aliphatic polyisocyanates can be used to prepare the NCO-functional prepolymer. As used herein, the term "polyisocyanate" refers to compounds comprising at least two un-reacted isocyanate groups. Polyisocyanates include diisocyanates and diisocyanate reaction products comprising, for example, biuret, isocyanurate, uretdione, urethane, urea, iminooxadiazine dione, oxadiazine dione, carbodiimide, acyl urea, allophanate groups, or prepolymers, the like, or a combination thereof. The term "aliphatic polyisocyanates" also includes cycloaliphatic polyisocyanates. A variety of polyfunctional isocyanate-reactive components can also be employed in the second reaction mixture. Non-limiting examples can include a polyol or polyamine having a number average molecular weight of from 300 to 6000 which is based on one of a polyether, a polyester, a polycarbonate, a polycarbonate ester, a polycaprolactone, a polybutadiene, the like, or a combination thereof.

Various embodiments include polyether polyols formed from the oxyalkylation of various polyols, including glycols such as ethylene glycol, 1,2- 1,3- or 1,4-butanediol, 1,6-hexanediol, and the like, or higher polyols, such as trimethylol propane, pentaerythritol and the like. One useful oxyalkylation method is by reacting a polyol with an alkylene oxide, for example, ethylene oxide or propylene oxide in the presence of a basic catalyst or a coordination catalyst such as a double-metal cyanide (DMC).

Suitable polyester polyols can be prepared by the polyesterification of organic polycarboxylic acids, anhydrides thereof, or esters thereof with organic polyols. Preferably, the polycarboxylic acids and polyols are aliphatic or aromatic dibasic acids and diols.

The diols which may be employed in making the polyester include alkylene glycols, such as ethylene glycol, 1,2- 1,3- or 1,4- butanediol, neopentyl glycol and other glycols such as cyclohexane dimethanol, polycaprolactone diol (for example, the reaction product of caprolactone and ethylene glycol), polyether glycols, for example, poly(oxytetramethylene) glycol and the like. However, other diols of various types and, as indicated, polyols of higher functionality may also be utilized in various embodiments of the invention. Such higher polyols can include, for example, trimethylol propane, trimethylol ethane, pentaerythritol, and the like, as well as higher molecular weight polyols such as those produced by oxyalkylating low molecular weight polyols.

The acid component of the polyester consists primarily of monomeric carboxylic acids, or anhydrides thereof, or esters thereof having 2 to 18 carbon atoms per compound. Among the acids which are useful are phthalic acid, isophthalic acid, terephthalic acid, tetrahydrophthalic acid, hexahydrophthalic acid, adipic acid, succinic acid, azelaic acid, sebacic acid, maleic acid, glutaric acid, chlorendic acid, tetrachlorophthalic acid and other dicarboxylic acids of varying types. Also, there may be employed higher polycarboxylic acids such as trimellitic acid and tricarballylic acid.

In addition to polyester polyols formed from polybasic acids and polyols, polycaprolactone-type polyesters can also be employed. These products are formed from the reaction of a cyclic lactone such as ε-caprolactone with a polyol containing primary hydroxyls such as those mentioned above. Such products are described, for example, in U.S. Pat. No. 3,169,949.

Suitable hydroxy-functional polycarbonate polyols may be those prepared by reacting monomeric diols (such as 1,4-butanediol, 1,6-hexanediol, di-, tri- or tetraethylene glycol, di-, tri- or tetrapropylene glycol, 3-methyl-1,5-pentanediol, 4,4'-dimethylolcyclohexane and mixtures thereof) with diaryl carbonates (such as diphenyl carbonate, dialkyl carbonates (such as dimethyl carbonate and diethyl carbonate), alkylene carbonates (such as ethylene carbonate or propylene carbonate), or phosgene. Optionally, a minor amount of higher functional, monomeric polyols, such as trimethylolpropane, glycerol or pentaerythritol, may be used.

In various embodiments, low molecular weight diols, triols, and higher alcohols may also be included in the NCO-functional prepolymer. In many embodiments, they are monomeric and have hydroxyl values of 375 to 1810. Such materials can include aliphatic polyols, particularly alkylene polyols containing from 2 to 18 carbon atoms. Examples include ethylene glycol, 1,4-butanediol, 1,6-hexanediol, and cycloaliphatic polyols such as cyclohexane dimethanol. Examples of triols and higher alcohols include trimethylol propane and pentaerythritol. Also useful are polyols containing ether linkages such as diethylene glycol and triethylene glycol.

A variety of monofunctional components can also be included in the second reaction mixture. In some examples, the monofunctional component can be or include a monofunctional isocyanate-reactive component. Where this is the case, the monofunctional isocyanate-reactive component can be or include methanol, ethanol, propanol, butanol, 2-ethylhexyl alcohol, other $C_5$-$C_{38}$ alkanols, $C_3$-$C_{25}$ alkenyl alcohols (containing one or more double bonds), or mixtures of any of these. It is noted that equivalent amines or thiols can also be used.

In some additional examples, the monofunctional component can be or include a monofunctional isocyanate. Where this is the case, the monofunctional isocyanate can be or include methyl isocyanate, ethyl isocyanate, propyl isocyanate, butyl isocyanate, hexyl isocyanate, octyl isocyanate, isopropyl isocyanate, phenyl isocyanate, (meth)acryloyl isocyanate, 2-(meth)acryloyloxyethyl isocyanate, 3-(meth)acryloyloxypropyl isocyanate, 2-(meth)acryloyloxy-1-methylethyl isocyanate, 2-(meth)acryloyloxy-2-methylethyl isocyanate, naphthyl isocyanate, or mixtures of any of these.

In some examples, the monofunctional component can include both a monofunctional isocyanate-reactive component and a monofunctional isocyanate. In other examples, the monofunctional component can include a monofunctional isocyanate-reactive component or a monofunctional isocyanate component. A small amount of a monofunctional component, such as a monofunctional alcohol or monofunctional isocyanate, can be incorporated into the NCO-terminated prepolymer backbone to "chain terminate" the NCO-terminated prepolymer to help maintain a reasonably low viscosity.

Typically, the second reaction mixture can include an equivalent ratio of from 1:1 to 4:1 of polyfunctional isocyanate-reactive component equivalents to monofunctional component equivalents. In other examples, the second reaction mixture can include an equivalent ratio of from 1:1 to 3:1, or from 2:1 to 4:1 of polyfunctional isocyanate-reactive component equivalents to monofunctional component equivalents.

The isocyanate component(s) and the isocyanate-reactive component(s) may be combined and allowed to react at a ratio to generate an NCO-functional prepolymer having from 0.5 wt% NCO to 15 wt% NCO based on ISO 11909:2007. In various embodiments, the NCO-functional prepolymer has from 0.5 wt% NCO to 10 wt% NCO, from 1 wt% NCO to 5 wt% NCO, or from 2 wt% NCO to 4 wt% NCO. In any case, an excess of aliphatic polyisocyanate is employed to generate an NCO-functional prepolymer. Additionally, in some embodiments, the resulting NCO-functional prepolymer can be stripped to remove residual monomeric polyisocyanate (e.g., via thin-film evaporation) prior to terminating with the polyaspartate.

Because the NCO-functional prepolymer is formed with a monofunctional component, the number average NCO functionality of the NCO-functional prepolymer is < 2. In some examples, the NCO-terminated prepolymer can have a number average NCO functionality of from 1.1 to < 2, or from 1.2 to 1.9, or from 1.3 to 1.8, or from 1.4 to 1.7.

Number average NCO functionality of the prepolymer can be calculated as follows:

$$\overline{f_{prepolymer}} = Average\ Functionality\ of\ Final\ Prepolymer$$

$$= \left(Mole_{fractionprepolymer}\right)\left(\overline{f_{polyolblend}}\right) + \left(Mole_{fractionNCOmonomer}\right)\left(NCO\ monomer\ functionality\right)$$

where

$$\boldsymbol{Mole}_{fractionprepolymer} = Mole\ Fraction\ of\ Urethane\ Prepolymer = \frac{Moles_{urethane}}{Moles_{urethane} + Moles_{NCOmonomer}}$$

$$\boldsymbol{Moles}_{NCOmonomer} = Moles\ of\ monomeric\ NCO\ (After\ Reaction) = \frac{Eq_{monomericNCO}}{NCO\ monomer\ functionality}$$

$$\boldsymbol{Eq}_{monomericNCO} = Equivalents\ of\ monomeric\ NCO\ (After\ Reaction)$$

$$= Eq_{polyisocyanateA} - Eq_{polyesterA} - Eq_{monofunctionalcomponent}$$

$$\overline{f_{polyolblend}} = Average\ functionality\ of\ polyol\ blend = \frac{sum\ of\ equivalents\ of\ polyol}{sum\ of\ moles\ of\ polyol} = \frac{\sum_{i=1}^{n} \frac{mass_i}{eqwt_i}}{\sum_{i=1}^{n} \frac{mass_i}{Mw_i}}$$

$$\boldsymbol{Mole}_{fractionNCOmonomer} = Mole\ Fraction\ of\ Unreacted\ NCO\ monomer = \frac{Moles_{NCOmonomer}}{Moles_{urethane} + Moles_{NCOmonomer}}$$

It is further noted that various analytical techniques can be employed to demonstrate that the NCO-functional prepolymer included in the first reaction mixture to prepare the aspartate-terminated prepolymer had a number average NCO functionality of $< 2$.

Surprisingly, as will be discussed in further detail below, the addition of the monofunctional component to the NCO-terminated prepolymer produces an aspartate-terminated prepolymer with a lower number average molecular weight, which, after combining with an aliphatic polyisocyanate as described herein, can have an acceptable initial viscosity at a solids content of from 35 wt% to 40 wt% solids, without negatively impacting other performance characteristics such as bond strength development and/or pot life of the adhesive. Percent solids can be determined based on ASTM D2369:2020.

As described elsewhere herein, aliphatic polyisocyanates generally have lower reactivity and slower cure times than aromatic polyisocyanates in two-component (2K) adhesive systems. With this in mind, the polyaspartate can serve multiple functions in the aspartate-terminated prepolymer, depending on the particular formulation. For example, the aspartate-terminated prepolymer can have a faster reaction rate with a co-reactant polyisocyanate component than the polyols that are generally used in the art.

In certain embodiments, the aspartate-terminated prepolymer can be prepared with a variety of polyaspartate components. As those skilled in the art are aware, polyaspartates may be produced by the reaction of a polyamine with a Michael addition receptor, i.e., an olefin substituted on one or both of the olefinic carbons with an electron withdrawing group such as cyano, keto, or ester (an electrophile) in a Michael addition reaction. Examples of suitable Michael addition receptors include, but are not limited to, acrylates, and diesters such as dimethyl maleate, diethyl maleate, dibutyl maleate, dimethyl fumarate, diethyl fumarate, and dibutyl fumarate.

The polyaspartate may include one or more polyaspartates corresponding to formula (I):

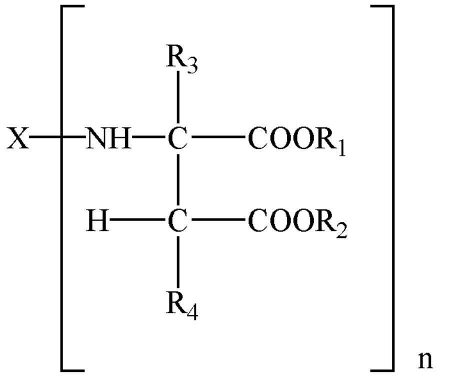

(I)

wherein:

n is an integer of at least 2;

X represents an aliphatic residue, such as a linear, branched, and/or cyclic aliphatic group obtained by removing amino groups from a linear, branched, and/or cyclic aliphatic polyamine;

$R_1$ and $R_2$ each independently represent organic groups that are inert to isocyanate groups under reaction conditions; and

$R_3$ and $R_4$ each independently represent hydrogen or organic groups that are inert to isocyanate groups under reaction conditions.

As will be described in further detail, the polyaspartate can be prepared with a variety of polyamines, including low molecular weight polyamines, high molecular weight polyamines, or a combination thereof. Additionally, the polyamines can have a wide range of amine functionality, repeat unit type, distribution, etc. This wide range of molecular weight, amine functionality, repeating unit type, and distribution can provide versatility in the design of new compounds or mixtures.

Suitable low molecular weight polyamines have molecular weights in various embodiments of from 60 to 400, in selected embodiments of from 60 to 300. Suitable low-molecular-weight polyamines include, but are not limited to, ethylene diamine, 1,2- and 1,3-diaminopropane, 1,5-diaminopentane, 1,3-, 1,4- and 1,6-diaminohexane, 1,3-diamino-2,2-dimethyl propane, 2-methyl-1,5-pentane diamine, isophorone diamine, 4,4'-diamino-dicyclohexyl methane, 4,4'-diamino-3,3'-dimethyldicyclohexyl methane, 1,4-bis(2-amino-prop-2-yl)-cyclohexane, hydrazine, piperazine, bis(4-aminocyclohexyl)methane, and mixtures of such polyamines. Representative polyaspartates prepared from these low molecular weight polyamines include DESMOPHEN NH-1220, DESMOPHEN NH-1420, and DESMOPHEN NH-1520, all commercially available from Covestro.

In some embodiments of the invention, a single high molecular weight polyamine may be used. Also, mixtures of high molecular weight polyamines, such as mixtures of di- and trifunctional materials and/or different molecular weight or different chemical composition materials, may be used. The term "high molecular weight" is intended to include polyamines having a molecular weight of at least 400 in various embodiments. In selected embodiments, the polyamines have a molecular weight of from 400 to 6,000. Non-limiting examples can include polyethylene glycol bis(amine) polypropylene glycol bis(amine), or polytetramethylene glycol bis(amine), the like, or a combination thereof.

In certain embodiments, the polyamine can be for example, one or more of the JEFFAMINE series of amine-terminated polyethers from Huntsman Corp., such as, JEFFAMINE D-230, JEFFAMINE D-400, JEFFAMINE D-2000, JEFFAMINE D-4000, JEFFAMINE T-3000 and JEFFAMINE T-5000.

In some specific examples, X represents a group obtained by removing the amino groups from 1,3-cyclohexane diamine, 1,4-cyclohexane diamine, 1-amino-3,3,5-trimethyl-5-aminomethyl-cyclohexane, 2-methyl-1,5-pentane diamine, 2,4-hexahydrotoluylene diamine, 2,6-hexahydrotoluylene diamine, 4,4'-diamino-dicyclohexyl methane, 3,3-dimethyl-4,4'-diamino-dicyclohexyl-methane, 3,3-diethyl-4,4'-diamino-dicyclohexyl methane, or a combination thereof.

In some embodiments, the resulting aspartate-terminated prepolymer can be further diluted in an organic solvent to form an aspartate-terminated prepolymer composition. In other words, the aspartate-terminated prepolymer composition can further include an organic solvent as a diluent. Non-limiting examples of organic solvents can include ethyl acetate, butyl acetate, methyl ethyl ketone, methyl isobutyl ketone, methoxypropyl acetate, N-methyl pyrrolidone, petroleum hydrocarbons, the like, or a combination thereof.

In those embodiments where the aspartate-terminated prepolymer is diluted in an organic solvent, it can be diluted to various degrees to maintain a reasonable viscosity for the intended application. In those embodiments, the aspartate-terminated prepolymer can be diluted to a solids content of from 20 wt.% to 90 wt.% solids based on a total

weight of the aspartate-terminated prepolymer composition. In certain embodiments, the aspartate-terminated prepolymer can be diluted to a solids content from 20 wt.% to 60 wt.% or from 40 wt.% to 90 wt.% solids based on a total weight of the aspartate-terminated prepolymer composition. In various embodiments, the aspartate-terminated prepolymer composition can include from 20 wt.% to 40 wt.%, from 30 wt.% to 50 wt.%, from 40 wt.% to 60 wt.%, from 50 wt.% to 70 wt.%, from 60 wt.% to 80 wt.%, or from 70 wt.% to 90 wt.% solids, based on a total weight of the aspartate-terminated prepolymer composition. In some specific examples, the aspartate-terminated prepolymer composition includes from 60 wt.% to 90 wt.% solids based on a total weight of the aspartate-terminated prepolymer composition. Percent solids can be calculated based on ASTM D2369:2020.

As described previously, the addition of a monofunctional component into the NCO-terminated prepolymer can help reduce the viscosity of the aspartate-terminated prepolymer composition relative to a "Comparative Control" that is an equivalent aspartate-terminated prepolymer prepared with an otherwise equivalent aliphatic NCO-terminated prepolymer having a number average NCO functionality of $\geq 2$. Thus, the "Comparative Control," as referred to herein, is an aspartate-terminated prepolymer prepared with or from an aliphatic NCO-terminated prepolymer having a number average NCO functionality of $\geq 2$, but otherwise prepared at the same solids content, diluted with the same solvent, and otherwise prepared with the same reactants using the same reaction process at the same NCO:OH ratio, etc., with the only difference being that the monofunctional component is omitted from the second reaction mixture. In other words, the "Comparative Control" is identical to the inventive aspartate-terminated prepolymer except that it was prepared with or from an NCO-terminated prepolymer prepared from a reaction mixture excluding the monofunctional component content, resulting in a number average NCO functionality of $\geq 2$. With this in mind, in some cases, the aspartate-terminated prepolymer can have a viscosity at 25 °C based on ASTM D1084:2016 that is $\leq 50\%$ of a viscosity of a Comparative Control. In some additional examples, the aspartate-terminated prepolymer can have a viscosity at 25 °C based on ASTM D1084:2016 that is $\leq 45\%$, $\leq 40\%$, or $\leq 30\%$ of a viscosity of a Comparative Control.

In some additional examples, the monofunctional component can provide an aspartate-terminated prepolymer having a lower molecular weight and polydispersity as compared to a Comparative Control. For example, in some cases, the aspartate-terminated prepolymer can have a weight average molecular weight of $\leq 90\%$, $\leq 80\%$, $\leq 70\%$, or $\leq 60\%$ of a weight average molecular weight of a Comparative Control. Weight average molecular weight can be determined by gel permeation chromatography.

In some specific examples, the aspartate-terminated prepolymer can have a weight average molecular weight of from 6000 g/mol to 12,000 g/mol based on gel permeation chromatography. In other examples, the aspartate-terminated prepolymer can have a weight average molecular weight of from 6000 g/mol to 8000 g/mol, from 8000 g/mol to 10,000 g/mol, or from 10,000 g/mol to 12,000 g/mol based on gel permeation chromatography.

In some additional examples, the aspartate-terminated prepolymer can have a polydispersity (MW/MN) of $\leq$ 95%, $\leq 90\%$, $\leq 85\%$, or $\leq 80\%$ of the polydispersity of a Comparative Control.

In some specific examples, the aspartate-terminated prepolymer can have a polydispersity of $\leq 4$ based on gel permeation chromatography. In other examples, the aspartate-terminated prepolymer can have a polydispersity of from 3 to 3.5, from 3.2 to 3.8, from 3.4 to 3.9, or from 3.5 to 4 based on gel permeation chromatography.

The aspartate-terminated prepolymer or aspartate-terminated prepolymer composition can be part of a multiple-component, such as a two-component (2K), adhesive system, which can include a co-reactant polyisocyanate or polyisocyanate prepolymer component for combination with the aspartate-terminated prepolymer to form the adhesive.

In some examples, the adhesives can be or include a reaction product of an adhesive reaction mixture including an aliphatic polyisocyanate and an aspartate-terminated prepolymer as described herein. Typically, the aliphatic polyisocyanate and the aspartate-terminated prepolymer can be combined at an NCO:NH ratio of from 0.9:1 to 1.75:1. In some specific examples, the aliphatic polyisocyanate and the aspartate-terminated prepolymer can be combined at an NCO:NH ratio of from 0.9:1 to 1.3:1, from 1.1:1 to 1.5:1, or from 1.3:1 to 1.7:1.

In various embodiments, a variety of aliphatic polyisocyanate components can be included in the adhesives. For example, in certain embodiments, the aliphatic polyisocyanate component can be or include monomeric polyisocyanate, such as any of the aliphatic polyisocyanate monomers and aliphatic polyisocyanate adducts described elsewhere herein, or a combination thereof. In certain other embodiments, the polyisocyanate component can be or include an aliphatic polyisocyanate prepolymer and may optionally be diluted with solvent to reduce viscosity in a manner similar to that described herein of the aspartate-terminated prepolymer component of the adhesive.

Where the aliphatic polyisocyanate component includes an aliphatic polyisocyanate prepolymer, the polyisocyanate prepolymer can be a reaction product of a second aliphatic polyisocyanate and a second isocyanate reactive component. The types of polyisocyanates employed in the polyisocyanate prepolymer includes the same polyisocyanates and polyisocyanate adducts listed herein with reference to the NCO-functional prepolymer. Similarly, the types of isocyanate reactive components employed in the polyisocyanate prepolymer can include those listed herein with reference to the NCO-functional prepolymer. In some embodiments, the polyisocyanate prepolymer can be the same as the NCO-functional prepolymer. In certain embodiments, the polyisocyanate prepolymer can be different from the NCO-functional prepolymer. In selected embodiments, the polyisocyanate prepolymer can include the same polyisocyanate(s) as the

NCO-functional prepolymer, and the same or different isocyanate reactive component(s). In embodiments, the polyisocyanate and the isocyanate reactive component of the polyisocyanate prepolymer can be combined at a ratio to produce a polyisocyanate prepolymer having from 0.5% NCO to 35% NCO, in others, 2% NCO to 12% NCO, from 10% NCO to 18% NCO, from 12% to 20% NCO, or from 18% NCO to 25% NCO.

In some examples, the adhesives can be further diluted with an organic solvent, such as ethyl acetate, butyl acetate, methyl ethyl ketone, methyl isobutyl ketone, methoxypropyl acetate, N-methyl pyrrolidone, petroleum hydrocarbons, the like, or a combination thereof. As described previously, because the aspartate-terminated prepolymer is prepared with an NCO-functional prepolymer having a number average NCO functionality of $< 2$, the initial viscosity of the adhesive can be relatively low, which can reduce the amount of solvent required to achieve a suitable initial viscosity.

In some examples, the adhesives can be diluted with an organic solvent to a total solids content of from 35 wt% to 50 wt% based on a total weight of the adhesive. In some further examples, the adhesives can be diluted with an organic solvent to a total solids content of from 35 wt% to 45 wt% or from 40 wt% to 50 wt% based on a total weight of the adhesive. In still further examples, the adhesives can be diluted with an organic solvent to a total solids content of from 35 wt% to 40 wt% or from 40 wt% to 45 wt% based on a total weight of the adhesive.

In some examples, the adhesive reaction mixture can have an initial viscosity of from 15 centipoise (cP) to 30 cP based on ASTM D1084:2016 at 23 °C and a total solids content of 38 wt% solids based on a total weight of the adhesive reaction mixture. In additional examples, the adhesive reaction mixture can have an initial viscosity of from 15 cP to 25 cP or from 20 cP to 30 cP based on ASTM D1084:2016 at 23 °C and a total solids content of 38 wt% solids based on a total weight of the adhesive reaction mixture. In still additional examples, the adhesive reaction mixture can have an initial viscosity of from 15 cP to 20 cP or from 20 cP to 25 cP based on ASTM D1084:2016 at 23 °C and a total solids content of 38 wt% solids based on a total weight of the adhesive reaction mixture. Initial viscosity refers to the viscosity of the adhesive reaction mixture at the time of initial combination and mixing of the aliphatic polyisocyanate and the aspartate-terminated prepolymer.

A pot life of the adhesive reaction mixture, as measured by doubling of the initial viscosity according to ASTM D1084:2016 at 23°C, can typically be greater than or equal to 1 hour. In further detail, the aspartate-terminated prepolymer and the aliphatic polyisocyanate component can be combined at a variety of ratios to produce an adhesive reaction mixture. In various embodiments, the viscosity of the two-component adhesive reaction mixture at 23°C will require at least 0.5 hours to double, in certain embodiments, the viscosity at 23°C will require at least two hours to double, in other embodiments, at least four hours to double and in selected embodiments, the viscosity at 23°C will require at least eight hours to double in viscosity.

In additional examples, the adhesives can develop an acceptable bond strength to a substrate, defined as having a minimum of 150 g/in. measured @ 23°C according to ASTM D 1876-01 or substrate tear, in less than or equal to 5 days after the substrate is laminated with the adhesive. In other examples, the adhesives can develop an acceptable bond strength to a substrate, defined as having a minimum of 150 g/in. measured @ 23°C according to ASTM D 1876-01 or substrate tear, in less than or equal to 1 day or less than or equal to 7 days after the substrate is laminated with the adhesive.

Typical flexible packaging materials can include polyethylene terephthalate, metalized polyethylene terephthalate, polypropylene, aluminum foil, or a combination thereof. Thus, in some examples, the substrate employed to determine acceptable bond strength can include polyethylene terephthalate, metalized polyethylene terephthalate, polypropylene, aluminum foil, or a combination thereof.

The present disclosure also describes a method of minimizing aromatic amine migration in multi-layered substrate such as a packaging material. This method includes forming or applying an adhesive as described herein to one or more packaging material substrates and curing the adhesive.

The inventive adhesive can be formed on or applied to a variety of substrates, including multi-layered laminate films such as those for packaging materials or the like, particularly flexible packaging materials. Non-limiting examples of substrates include metals (aluminum, copper, and steel), plastics, wood, cement, concrete, glass, or a combination thereof. The adhesive of the invention can be applied by painting, rolling, pouring, spraying, dipping, casting, dispensing, the like, or a combination thereof. The inventive adhesive and substrate layers may be laminated together by processes known in the art.

In some specific examples, a multi-layered laminated film can include an adhesive as described herein applied to one or more substrate layers. The adhesive can bond one or more substrate layers together. In some examples, the one or more substrate layers can be or include polyethylene terephthalate, metalized polyethylene terephthalate, polypropylene, aluminum foil, or a combination thereof.

## EXAMPLES

The non-limiting and non-exhaustive examples that follow are intended to further describe various non-limiting and non-exhaustive embodiments without restricting the scope of the embodiments described in this specification. All

quantities given in "parts" and "percents" are understood to be by weight, unless otherwise indicated.

| | |
|---|---|
| POLYESTER A | aliphatic and aromatic polyester diol with a hydroxyl value of approximately 56 mg KOH/g commercially available from Covestro LLC as BAYCOLL AD 2047; |
| POLYASPARTATE A | a diaspartate prepared from 3, 3'-dimethyl-4, 4'-diamino-dicyclohexylmethane and diethyl maleate having an approximate amine value of 193 mgKOH/g and available commercially from Covestro LLC as DESMOPHEN NH 1520; |
| POLYASPARTATE B | a diaspartate prepared from 4, 4'-diamino-dicyclohexylmethane and diethyl maleate having an approximate amine value of 204 mgKOH/g and available commercially from Covestro LLC as DESMOPHEN NH 1420; |
| POLYASPARTATE C | a diaspartate prepared from 4, 4'-diamino-dicyclohexylmethane and diethyl maleate having an approximate amine value of 204 mgKOH/g and available commercially from Covestro LLC as DESMOPHEN NH 1423; |
| POLYISOCYANATE A | an aliphatic diisocyanate (1, 6-hexamethylene diisocyanate) with an average isocyanate content of 49.7 wt. % and commercially available from Covestro LLC as DESMODUR H; |
| POLYISOCYANATE B | HDI trimer (isocyanurate) having an average isocyanate content of 21.8 wt. %, commercially available from Covestro LLC as DESMODUR N-3300; |
| MONO-FUNCTIONAL | 2-ethylhexanol, commercially available from Sigma |
| COMPOUND A | Aldrich; |
| ETHYL ACETATE | commercially available from Sigma Aldrich. |

## Overview of Adhesive Preparation and Testing Procedures

The present disclosure describes the use of reduced viscosity aspartate-terminated prepolymers in combination with aliphatic polyisocyanates to produce solvent borne polyurethane-polyurea laminating adhesives. The general three-step procedure for their preparation and use is outlined herein with more detail on each step provided below:

### Step 1. Preparation of an NCO-terminated prepolymer

An NCO-terminated prepolymer was prepared by reaction of a polyol, a monol chain terminator, and a polyisocyanate with an excess of NCO equivalents to OH equivalents. The composition and characterization of the NCO-terminated prepolymers produced in the Examples are summarized in Table I.

### Step 2. Preparation of an aspartate-terminated prepolymer

An NCO-terminated prepolymer prepared in Step 1 was reacted with a polyaspartate. The ratio of NH/NCO equivalents was 2.0. The composition and characterization of the aspartate-terminated prepolymers produced in the Examples are summarized in Table II.

### Step 3. Preparation and characterization of processing and properties of multi-layer laminated structures using the aspartate-terminated prepolymers of the invention

An aspartate-terminated prepolymer, prepared in Step 2, was combined in ethyl acetate with a polyisocyanate to produce a laminating adhesive. The workable pot life of the mixture was determined by monitoring viscosity over time. Additionally, laminates were prepared from these adhesive compositions using pairs of representative films commonly used in packaging laminates. The bond strength development over time was measured by peel testing of the laminates at various time intervals after lamination.

Detailed general procedure for preparation of NCO-terminated prepolymers (Step 1)

POLYESTER A was melted (60-80°C) and charged to a round bottomed flask equipped with an overhead mechanical stirrer, heating mantle and nitrogen inlet. In NCO-TERMINATED PREPOLYMERS B and C (Inventive Examples), MONO-FUNCTIONAL COMPOUND A was added, and the mixture cooled to 40°C before addition of POLYISOCYANATE A. For NCO-TERMINATED PREPOLYMER A and D (Comparative Examples), no MONO-FUNCTIONAL COMPOUND A was added prior to addition of POLYISOCYANATE A.

The reaction mixture was heated with stirring to 80°C and maintained under a nitrogen purge for ~3-4 hours. The reaction mixture was cooled to 50°C and ETHYL ACETATE was added to the reaction vessel. The contents of the reactor were removed and stored in a sample jar at 40°C until used in Step 2. The viscosity of the reaction product was recorded at 25°C and the sample was titrated for NCO content using standard n-butyl amine titration according to ASTM D2572-19. Detailed composition and characterization of the NCO-terminated PREPOLYMERS A, B, C, and D are summarized in Table I.

**Table I**

| | NCO-TERMINATED PREPOLYMER | | | |
|---|---|---|---|---|
| | A | B | C | D |
| POLYISOCYANATE A | 28.6 g 338 meq. | 50.3 g 595 meq. | 40.9 g 484 meq. | 81.6 g 966 meq. |
| POLYESTER A | 181.4 g 178 meq. | 239.5 g 235 meq. | 155.9 g 153 meq. | 518.4 g 508 meq. |
| MONO-FUNCTIONAL COMPOUND A | - | 10.1 g 78 meq. | 13.2 g 102 meq. | - |
| ETHYL ACETATE | 90 g | 128.6 g | 90 g | 257 g |
| Solids content (wt. % non-volatiles) | 70 | 70 | 70 | 70 |
| NCO content-Theoretical (wt. % NCO) | 2.24 | 2.76 | 3.21 | 2.24 |
| NCO content-Experimental (wt. % NCO) | 1.97 | 2.43 | 3.12 | 2.00 |
| NCO:OH | 1.9:1 | 1.9:1 | 1.9:1 | 1.9:1 |
| Number Average NCO Functionality | 2 | 1.6 | 1.43 | 2 |
| Viscosity @ 25 °C (cP) | 1053 | 459 | 405 | 1043 |

Detailed General Procedure for Preparation of Aspartate-terminated Prepolymers (Step 2)

An NCO-TERMINATED PREPOLYMER from Step 1 was charged to a round bottomed flask equipped with an overhead mechanical stirrer, heating mantle and nitrogen inlet. The NCO-TERMINATED PREPOLYMER was held at ~ 20°C, prior to addition of POLYASPARTATE A, POLYASPARTATE B, or POLYASPARTATE C. After the polyaspartate was added, the reaction mixture was stirred and heated to 50°C under a nitrogen atmosphere until the isocyanate band of the reaction mixture was no longer visible by IR analysis (~ 4 hours). The reaction product was cooled to room temperature and removed from the reaction flask. The viscosity was recorded at 25°C. Amine numbers were determined by standard titration according to ASTM D6979. The components and properties of the ASPARTATE-TERMINATED PREPOLYMERS used for preparing laminating adhesives are summarized in Table II.

**Table II**

| | ASPARTATE-TERMINATED PREPOLYMER | | | | |
|---|---|---|---|---|---|
| | A (Comp.) | B (Inventive) | C (Inventive) | D (Inventive) | E (Comp.) |
| NCO-TERMINATED PREPOLYMER A | 215.3 g (101 meq.) | - | | - | - |
| NCO-TERMINATED PREPOLYMER B | - | 202 g (117 meq.) | 205.3 g (119 meq.) | | |

(continued)

| | ASPARTATE-TERMINATED PREPOLYMER | | | | |
|---|---|---|---|---|---|
| | A (Comp.) | B (Inventive) | C (Inventive) | D (Inventive) | E (Comp.) |
| NCO-TERMINATED PREPOLYMER C | - | - | | 184.8 g (137 meq.) | |
| NCO-TERMINATED PREPOLYMER D | - | - | - | - | 218.9 g (104 meq.) |
| POLYASPART ATE A | 59.3 g (202 meq.) | 68.6 g (234 meq.) | | 80.6 g (274 meq.) | |
| POLYASPART ATE B | - | - | 66.3 g (238 meq.) | | |
| POLYASPART ATE C | - | - | - | - | 56.8 g (209 meq.) |
| ETHYL ACETATE | 25.4 | 29.4 g | 28.4 g | 34.6 | 24.3 g |
| Solids content (wt. % non-volatiles) | 69.6 | 68.5 | 68.9 | 68.9 | 69.6 |
| NH no. Theoretical (mg KOH/g) | 18.9 | 21.9 | 22.2 | 25.7 | 19.5 |
| NH:NCO Ratio | 2:1 | 2:1 | 2:1 | 2:1 | 2:1 |
| Viscosity @ 25 C (cP) | 1750 | 505 | 1358 | 513 | 4432 |
| Molecular weight (Mn) | 3714 | 2801 | 3043 | 2064 | 4632 |
| Molecular weight (Mw) | 15969 | 10709 | 10773 | 7731 | 19090 |
| Polydispersity (PDI) | 4.30 | 3.82 | 3.54 | 3.75 | 4.12 |

Determination of workable pot-life of the adhesive composition

POLYISOCYANATE B and each of the ASPARTATE-TERMINATED PREPOLYMERS from Table II were combined at 23°C. The samples were diluted using dry ETHYL ACETATE to a target viscosity of 20 +/- 8 centipoise (cP). Initial viscosity was recorded and subsequently measured according to ASTM D1084:2016 at 23°C after 1, 2, 4, and 8 hours. All formulation data and viscosity measurement are summarized in Table III.

Bond strength

In the following Examples, POLYISOCYANATE B and one of the ASPARTATE-TERMINATED PREPOLYMERS from Table II were combined at 23°C. The samples were diluted to 50% solids using dry ETHYL ACETATE to assure consistent adhesive application thickness between samples. Each formulation was applied to corona-treated polyethylene terephthalate (PET) film using a wire wound rod, resulting in a dry adhesive film weight of between 2.5 - 5.0 g/$m^2$. The samples were dried at 60°C for 60 seconds, laminated to corona-treated PET, metalized PET (MPET), corona-treated cast polypropylene (cPP) and aluminum foil (Al) using a hot roll laminator at 50 psig, 65°C traveling at two feet per minute.

Bond strengths were measured according to ASTM D 1876-01 using an INSTRON machine at a peel rate of 12 in/min. The measurements were recorded at time intervals of four hours, one day, seven days and 14 days after lamination. All results are given in g/in., with failure modes designated as follows: ST is "Substrate Tear" meaning one or more of the substrates tore during analysis; P is "Peel" meaning the sample smoothly peeled during analysis; Z is "Zipper" meaning the sample rapidly increased and decreased in bond strength during analysis; C is "Cohesive" meaning the adhesive split during analysis partially staying adhered to both substrates; and AF is "Adhesive Failure" meaning the adhesive completely and cleanly separated from one of the two substrates during analysis. Detailed formulations and bond strength data with various substrates are presented in Table III.

Definition of Acceptable Application Viscosity & Application Solids

Application viscosity is particularly important to adhesive manufacturers and converters. If the viscosity is not correct, the adhesive may not transfer to the web properly causing adhesion issues in the laminates. In addition, application solids are also important. If the adhesives must be thinned too much with solvent to achieve the targeted application viscosity, the economics of the adhesive become undesirable. For the purposes of this invention, the inventors defined a minimum acceptable solids level in ethyl acetate where one can achieve viscosity of 20 (+/- 8) cP or lower for the adhesive, at 35% by weight solids.

Similarly, if the adhesive composition builds viscosity too rapidly after combining the aspartate-terminated prepolymer with the polyisocyanate component, the workable pot life will be too short for viable commercial production. For the purposes of this invention, the inventors defined an acceptable pot life to be one hour or greater, where pot life is defined as the time for the adhesive composition to double in viscosity at 23°C after mixing the polyisocyanate and polyaspartate in solvent at a solids level which gives an initial viscosity of 20 (+/- 8) cP.

Definition of Acceptable Cure Rate

Ideally, laminates will rapidly cure after the lamination process. Cure rates are determined by measuring the bond strength of the laminates at various time intervals after the lamination process. For the purposes of this invention, the inventors defined an acceptable cure rate to be where the adhesive bond between all of the substrate pairs tested achieved a minimum value of 150 g/in. in less than five days of storage at 23°C, when measured @ 23°C according to ASTM D 1876-01. Alternatively, if substrate tear was observed in peel tests conducted within five days of lamination and storage at 23 C, the cure rate was deemed to be acceptable.

**Table III**

| | **Laminate** | | | | |
|---|---|---|---|---|---|
| | **Example 1 (comp.)** | **Example 2 (inventive)** | **Example 3 (inventive)** | **Example 4 (inventive)** | **Example 5 (comp.)** |
| POLYISOCYANATE B | 2.7 g 14.0 meq. | 3.8 g 19.7 meq. | 3.5 g 18.2 meq. | 3.5 g 18.2 meq. | 2.8 g (14.5 meq.) |
| ETHYL ACETATE | 46.2 g | 44.2 g | 39.2 g | 38.5 g | 54.2 g |
| ASPARTATE-TERMINATED PREPOLYMER A | 36.2 g 13.9 meq. | - | - | - | - |
| ASPARTATE-TERMINATED PREPOLYMER B | - | 44.5 g 17.4 meq. | - | - | - |
| ASPARTATE-TERMINATED PREPOLYMER C | - | - | 40.0 g 14.5 meq. | - | - |
| ASPARTATE-TERMINATED PREPOLYMER D | - | - | - | 34.9 g 19.3 meq. | - |
| ASPARTATE-TERMINATED PREPOLYMER E | - | - | - | - | 36.1 g (12.5 meq.) |
| Solids Content @ initial viscosity (wt. % non-volatiles) | 33.0 | 38.0 | 38.0 | 36.0 | 30 |
| **Viscosity @ 23 °C over time (cP)** | | | | | |
| Initial | 26 | 21 | 22 | 12 | 20 |
| 1 hour | 26 | 22 | 23 | 12 | 22 |
| 2 hours | 26 | 22 | 27 | 15 | 23 |
| 4 hours | 26 | 23 | 31 | 15 | 25 |
| 8 hours | 28 | 23 | 48 | 16 | 30 |
| **Bond Strength of Laminates (p/in.)** | | | | | |
| PET/PET after: | | | | | |

(continued)

| Bond Strength of Laminates (p/in.) | | | | | | |
|---|---|---|---|---|---|---|
| 4 hours | | 501 C | 242 C | 1374 ST | 52 C | 458 AF |
| 1 day | | 1754 ST | 354 C | 1011 ST | 276 C | 294 AF |
| 7 days | | 933 ST | 1516 ST | 350 AF | 1477 ST | 285AF |
| 14 days | | 1180 ST | 1374 ST | 661 ST | 1555 ST | 298 AF |
| PET/MPET after: | | | | | | |
| 4 hours | | 709 C | 553 C | 596 ST | 224 C | 683 ST |
| 1 day | | 769 ST | 769 C | 622 ST | 717 ST | 743 ST |
| 7 days | | 687 ST | 868 ST | 765 ST | 830 ST | 791 ST |
| 14 days | | 687 ST | 830 ST | 596 ST | 907 ST | 752 ST |
| PET/cPP after: | | | | | | |
| 4 hours | | 700 C | 398 C | 268 Z | 113 C | 475 Z |
| 1 day | | 561 Z | 639 C | 311 Z | 527 C | 415 Z |
| 7 days | | 441 Z | 817 AF | 363 Z | 583 Z | 402 AF |
| 14 days | | 428 Z | 700 AF | 544 Z | 506 Z | 454 Z |
| PET/A1 after: | | | | | | |
| 4 hours | 605 AF | 665 C | 458 AF | 302 AF | 684 AF | |
| 1 day | 691 AF | 657 AF | 492 AF | 579 AF | 596 AF | |
| 7 days | 648 AF | 661 AF | 480 AF | 596 AF | 544 AF | |
| 14 days | 622 AF | 583 AF | 505 AF | 570 AF | 570 AF | |
| Note: ST = Substrate Tear; P = Peel; Z = Zipper; C = Cohesive; and AF = Adhesive Failure | | | | | | |

As those skilled in the art will appreciate, Comparative Laminates (Examples 1 and 5) included an adhesive prepared from an aspartate-terminated prepolymer having acceptable pot life and cure speed. However, the adhesive had to be thinned to less than 35% solids with ethyl acetate to reach the target initial application viscosity of 20 +/- 8 cP. This example was prepared from an NCO-terminated prepolymer which did not contain a monofunctional compound to reduce the viscosity of the resulting aspartate-terminated prepolymer solution.

Further, as will be apparent to those skilled in the art, the laminates according to the invention (Examples 2, 3, and 4) were formulations where the mono-functional compound, 2-ethylhexanol, was included in the NCO-terminated prepolymer formulation. In each of these examples, the application solids content was greater than 35% at an application viscosity of 20 +/- 8 cP. The adhesive compositions of the invention also showed an acceptable pot life and a cure rate as defined herein.

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

## Claims

**1.** An aspartate-terminated prepolymer, comprising:

a reaction product of a first reaction mixture comprising:

an aliphatic NCO-terminated prepolymer having an NCO content of from 0.5 wt% to 15 wt% based on ISO 11909:2007 and a number average NCO functionality of < 2; and

a compound according to formula (I)

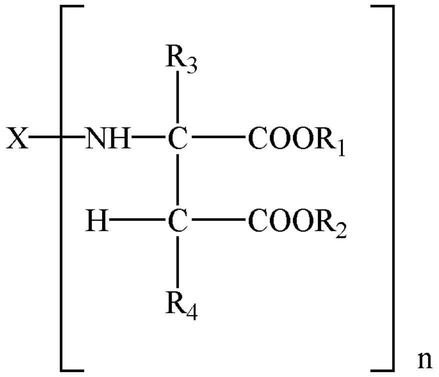

(I)

wherein,

X represents a linear, branched, and/or cyclic aliphatic group obtained by removing amino groups from a linear, branched, and/or cyclic aliphatic polyamine,
$R_1$ and $R_2$ are identical or different and represent organic groups which are inert towards isocyanate groups at a temperature of 100°C or less,
$R_3$ and $R_4$ are identical or different and represent hydrogen or organic groups which are inert towards isocyanate groups at a temperature of 100°C or less,
n represents an integer with a value of at least 2,

wherein the aliphatic NCO-terminated prepolymer and the compound according to formula (I) are combined at an NCO:NH equivalent ratio of 1:1.5 to 1:5.

**2.** The aspartate-terminated prepolymer of claim 1, wherein the first reaction mixture further comprises a solvent.

**3.** The aspartate-terminated prepolymer of claim 2, wherein the aspartate-terminated prepolymer has a total solids content of from 60 wt% to 90 wt%.

**4.** The aspartate-terminated prepolymer of claim 1, wherein the aspartate-terminated prepolymer has a viscosity at 25 °C based on ASTM D1084:2016 that is ≤ 50% of a viscosity of a Comparative Control aspartate-terminated prepolymer prepared with an otherwise equivalent aliphatic NCO-terminated prepolymer having a number average NCO functionality of ≥ 2.

**5.** The aspartate-terminated prepolymer of claim 1, wherein the aliphatic NCO-terminated prepolymer is a reaction product of a second reaction mixture comprising:

an aliphatic polyisocyanate;
a polyfunctional isocyanate-reactive component; and
a monofunctional component selected from the group consisting of a monofunctional isocyanate-reactive component and a monofunctional isocyanate.

**6.** The aspartate-terminated prepolymer of claim 5, wherein the second reaction mixture comprises an equivalent ratio of from 1:1 to 4:1 of polyfunctional isocyanate-reactive component equivalents to monofunctional isocyanate-reactive component equivalents.

**7.** The aspartate-terminated prepolymer of claim 5, wherein the polyfunctional isocyanate-reactive component comprises a polyester polyol.

**8.** The aspartate-terminated prepolymer of claim 5, wherein the monofunctional component comprises methanol, ethanol, propanol, butanol, 2-ethylhexyl alcohol, other $C_5$-$C_{38}$ alkanols, $C_3$-$C_{25}$ alkenyl alcohols, or mixtures of any of these.

**9.** The aspartate-terminated prepolymer of claim 5, wherein the monofunctional component comprises methyl isocyanate, ethyl isocyanate, propyl isocyanate, butyl isocyanate, hexyl isocyanate, octyl isocyanate, isopropyl isocyanate, phenyl isocyanate, (meth)acryloyl isocyanate, 2-(meth)acryloyloxyethyl isocyanate, 3-(meth)acryloyloxypropyl isocyanate, 2-(meth)acryloyloxy-1-methylethyl isocyanate, 2-(meth)acryloyloxy-2-methylethyl isocyanate, naphthyl isocyanate, or mixtures of any of these.

**10.** The aspartate-terminated prepolymer of claim 1, wherein X represents a group obtained by removing the amino groups from 1,3-cyclohexane diamine, 1,4-cyclohexane diamine, 2-methyl-1,5-pentane diamine, 1-amino-3,3,5-trimethyl-5-aminomethyl-cyclohexane, 2,4-hexahydrotoluylene diamine, 2,6-hexahydrotoluylene diamine, 4,4'-diamino-dicyclohexyl methane, 3,3-dimethyl-4,4'-diamino-dicyclohexyl-methane, 3,3-diethyl-4,4'-diamino-dicyclohexyl methane, or a combination thereof.

**11.** The aspartate-terminated prepolymer of claim 1, wherein the aspartate-terminated prepolymer has a weight average molecular weight based on gel permeation chromatography of ≤ 90% of a weight average molecular weight of a Comparative Control aspartate-terminated prepolymer prepared with an otherwise equivalent aliphatic NCO-terminated prepolymer having a number average NCO functionality of ≥ 2.

**12.** The aspartate-terminated prepolymer of claim 1, wherein the aspartate-terminated prepolymer has a polydispersity based on gel permeation chromatography of ≤ 95% of a polydispersity of a Comparative Control aspartate-terminated prepolymer prepared with an otherwise equivalent aliphatic NCO-terminated prepolymer having a number average NCO functionality of ≥ 2.

**13.** An adhesive, comprising:

a reaction product of an adhesive reaction mixture, comprising:

an aliphatic polyisocyanate; and
an aspartate-terminated prepolymer according to claim 1,

wherein the aliphatic polyisocyanate and the aspartate-terminated prepolymer are combined at an NCO:NH equivalent ratio of from 0.9:1 to 1.75:1.

**14.** The adhesive of claim 13, wherein the adhesive reaction mixture further comprises a solvent.

**15.** The adhesive of claim 13, wherein pot life of the adhesive reaction mixture, as measured by doubling of viscosity according to ASTM D1084:2016 at 23°C, is greater than or equal to 1 hour, and

wherein the adhesive develops an acceptable bond strength to a substrate, defined as having a minimum of 150 g/in. measured @ 23°C according to ASTM D1876-01 or substrate tear, in less than or equal to 5 days after the substrate is laminated with the adhesive, and
wherein the substrate preferably comprises polyethylene terephthalate, metalized polyethylene terephthalate, polypropylene, aluminum foil, or a combination thereof.

Europäisches Patentamt
European Patent Office
Office européen des brevets

# EUROPEAN SEARCH REPORT

Application Number
EP 22 18 9449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2014/316076 A1 (HECKROTH HEIKE [DE] ET AL) 23 October 2014 (2014-10-23)<br>* paragraph [0001]; claims 16-30 *<br>* paragraph [0137] - paragraph [0142] *<br>* paragraph [0143] - paragraph [0146] *<br>* paragraph [0040] *<br>----- | 1-4, 10-12<br>5-9, 13-15 | INV.<br>C08G18/08<br>C08G18/38<br>C08G18/73<br>C08G18/79<br>C08L75/02<br>C08L75/10<br>C09J175/02<br>C08G18/10 |
| X<br><br>A | US 6 355 829 B2 (BAYER AG [US]) 12 March 2002 (2002-03-12)<br>* column 1, line 5 - line 8; claims 1-12 *<br>* column 8, line 10 - column 10, line 27 *<br>* column 2, line 38 - line 45; examples 1-4 *<br>----- | 1-4, 10-12<br>5-9, 13-15 | |
| X<br><br>A | US 6 183 870 B1 (HERGENROTHER P RICHARD [US] ET AL) 6 February 2001 (2001-02-06)<br>* column 1, line 8 - line 11; claims 1-17 *<br>* column 7, line 34 - column 8, line 35; examples *<br>----- | 1-4, 10-12<br>5-9, 13-15 | |
| | | | TECHNICAL FIELDS SEARCHED (IPC) |
| A | US 2021/039359 A1 (HAIDER KARL W [US] ET AL) 11 February 2021 (2021-02-11)<br>* paragraph [0002]; claims 1-20 *<br>* paragraph [0066] - paragraph [0095]; examples; tables I-XVII *<br>* paragraph [0018]; claim 1 *<br>----- | 1-13 | C08G<br>C08L<br>C09J |

The present search report has been drawn up for all claims

1

| Place of search | Date of completion of the search | Examiner |
|---|---|---|
| Munich | 2 January 2023 | Paulus, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 18 9449

This annex lists the patent family members relating to the patent documents cited in the above-mentioned European search report. The members are as contained in the European Patent Office EDP file on
The European Patent Office is in no way liable for these particulars which are merely given for the purpose of information.

02-01-2023

| Patent document cited in search report | Publication date | Patent family member(s) | Publication date |
|---|---|---|---|
| US 2014316076 A1 | 23-10-2014 | CN 104105731 A | 15-10-2014 |
| | | CN 108570140 A | 25-09-2018 |
| | | CY 1121022 T1 | 11-12-2019 |
| | | DK 2794710 T3 | 10-12-2018 |
| | | DK 3385294 T3 | 08-02-2021 |
| | | EP 2794710 A1 | 29-10-2014 |
| | | EP 3385294 A1 | 10-10-2018 |
| | | EP 3786207 A1 | 03-03-2021 |
| | | ES 2694826 T3 | 27-12-2018 |
| | | ES 2846300 T3 | 28-07-2021 |
| | | HK 1201547 A1 | 04-09-2015 |
| | | HR P20181653 T1 | 14-12-2018 |
| | | HU E040031 T2 | 28-02-2019 |
| | | JP 6097764 B2 | 15-03-2017 |
| | | JP 2015508426 A | 19-03-2015 |
| | | LT 2794710 T | 26-11-2018 |
| | | PL 2794710 T3 | 28-02-2019 |
| | | PT 2794710 T | 22-11-2018 |
| | | SI 2794710 T1 | 31-12-2018 |
| | | US 2014316076 A1 | 23-10-2014 |
| | | US 2016256595 A1 | 08-09-2016 |
| | | WO 2013092504 A1 | 27-06-2013 |
| US 6355829 B2 | 12-03-2002 | CA 2316531 A1 | 02-03-2001 |
| | | DE 60016118 T2 | 03-11-2005 |
| | | EP 1081171 A2 | 07-03-2001 |
| | | ES 2233251 T3 | 16-06-2005 |
| | | MX PA00008303 A | 06-08-2002 |
| | | US 2002002300 A1 | 03-01-2002 |
| US 6183870 B1 | 06-02-2001 | CA 2316536 A1 | 21-08-2000 |
| | | MX PA00008304 A | 06-08-2002 |
| | | US 6183870 B1 | 06-02-2001 |
| US 2021039359 A1 | 11-02-2021 | US 2021039359 A1 | 11-02-2021 |
| | | WO 2022031685 A1 | 10-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3169949 A